# EUROPEAN PATENT APPLICATION

(11) **EP 1 486 911 A1**
(43) Date of publication of application: **15.12.2004**
(21) Application number: 03291407.9
(22) Date of filing: 12.06.2003
(51) Int. Cl.: G06K 19/077

(54) **Dielectric separation between inputs/outputs of a smart card**

(71) Applicant: Axalto S.A., 92120 Montrouge (FR)
(72) Inventor: Joffray, Olivier, 78810 Feucherolles (FR); Barbe, Serge, 78117 Chateaufort (FR); Thill, Michel, 78340 Les Clayes Sous Bois (FR)
(74) Representative: Renault, Patricia Marie Jacqueline

(57) **Abstract**

The present invention concerns a portable object comprising at least storage means and at least two contacts being connected to said storage means, at least two of said contacts being dielectrically separated.

## Description

The present invention concerns the domain of portable object and more particularly of smart card comprising at least two inputs/outputs (I/O).

This invention is applicable to any application where a smart card plays the role of a gateway between two areas, one considered as secured, the other not as described in a patent application filed by the present applicant the same day as the present application and whose title is "Smart and secure gateway for performing secure operations", hereafter called the Patent.

### TECHNICAL FIELD

Cards with integrated circuit also called smart cards are small plastic devices, which contain one or more embedded integrated circuits. A card with integrated circuit can be for example a memory card or a microprocessor card called also microprocessor chip card. A smart card is accessed with a card reader that has an aperture or slot or else into which the smart card is inserted. The smart card reader covers every device used to receive or to be connected with a smart card and work with it (read, write, delete, and/or every possible operation). The smart card reader can be part or linked with a computer, a pin pad or else... The present invention covers smart cards but also every portable object provided with integrated circuit allowing to work or dialog with at least one portable object accepting device, and in embodiments described hereafter, portable object with at least one integrated circuit designed to offer security functions such as authentication, validation, encryption/decryption, secure storage, .... The portable object accepting device may have the form of a housing provided with an aperture or slot to receive the portable object but also any form allowing the portable object to be connected to the portable object accepting device.

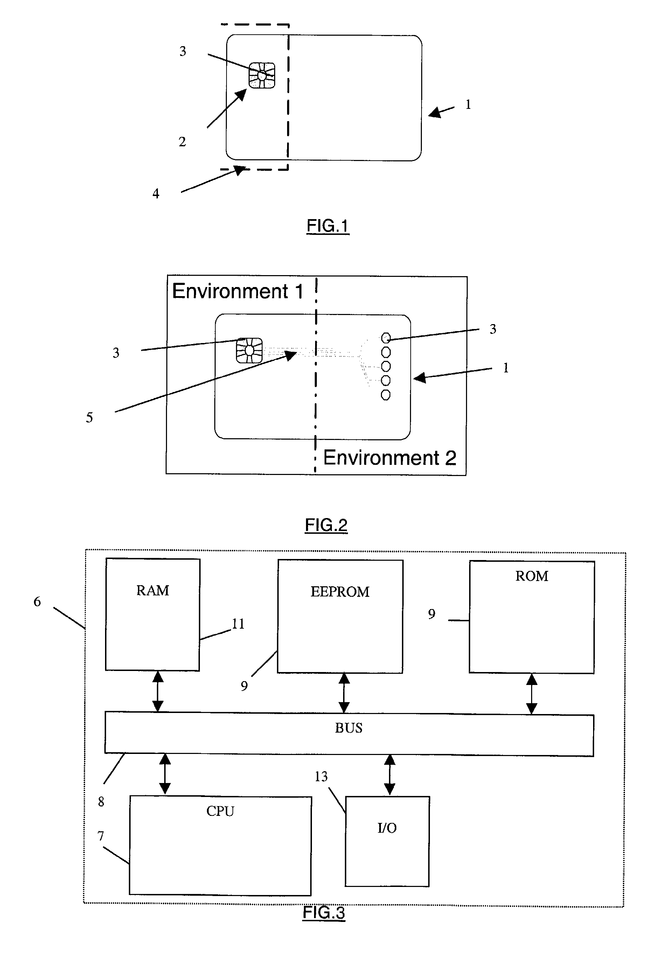

In more details, as shown in figure 1, the active part of the smart card 1 is constituted of a chip in the thickness of the card connected to a module 2. The module comprises a set of contact zones or pads called connectors 3 (also called contacts) on the surface of the card. In the examples described here below, the module comprises 8 connectors called C1 to C8.

As shown in the Patent, to realize a gateway using a smart card, a good solution is to use two I/Os at the same time: I/O1 and I/O2:
1. I/O1 is the mean to exchange data with the insecure environment.
2. I/O2 is the mean to exchange data with the secure environment.

The smart card, positioned in the middle of the two environments, can filter the data when sent from an environment to another, or can send or receive some data to and from both environments.

As shown by figure 1, when a smart card 1 is in a smart card accepting device 4, the eight electric connectors C1 to C8, making the reader 4 and the smart card 1 in relation, are not anymore visible. Thus, one could imagine to bypass the gateway function provided by the smart card by modifying the internal electronic of the reader.

A goal of the present invention is to avoid the possible modification of the portable object accepting device intended to bypass the gateway function of the portable object.

### BRIEF DESCRIPTION OF THE DRAWINGS

Other purposes, features and advantages of the invention will appear on reading the description which follows of the implementation of the method according to the invention and of a mode of realisation of a portable object designed for this implementation, given as a non-limiting example, and referring to the attached drawings in which:
- figure 1 is a diagrammatic representation of a smart card inserted in a reader in dotted lines according to the prior art ;
- figure 2 is a diagrammatic representation of a non-limiting mode of realisation of a smart card designed to implement the method according to the invention ;
- figure 3 is a schematic view of an example of realisation of an electronic unit integrated in a portable object such as a smart card designed to implement the method according to the invention ;
- figure 4 is a diagrammatic representation of another non-limiting mode of realisation of a smart card designed to implement the method according to the invention
- figure 5 is a diagrammatic representation of a practical example of a use of the smart card according to the present invention ;
- figure 6 is a diagrammatic representation of another practical example of use of the smart card according to the present invention.

### BEST WAY OF REALISING THE INVENTION

As shown in figure 2, the problem described here above is solved by providing a dielectric separation between the connectors (also called contact) aimed at being linked to the two environments secure and insecure, environment 1 and environment 2, such that it is not possible to modify a portable object accepting device 4 (in figure 2, a smart card reader) in order to access both environments without wireless communication means.

More generally, the invention concerns a portable object comprising at least storage means and at least two electrical contacts being connected to said storage means characterized in that at least two of said contacts are dielectrically separated. The electrical contacts are no more contiguous, are no more part of the same surface of contacts 3. Each electrical contact corresponds to the input/output in connection with a first environment, for example the secure environment on one hand and on other hand in connection with a second environment, for example the unsecured environment in such a way that a reader can not access to both inputs/outputs: the electrical connectors of the portable object corresponding to each input/output are dielectrically separated in such a way that an object accepting device can not access to both inputs/outputs.

Invisible electric wires 5 coated in the smart card plastic body ensure the electric connection between the smart card microchip 2 and the contacts 3 placed at the opposite of the card.

The evident dielectric separation makes an attack to the secure environment more difficult. With this separation of the contacts, and in fact of the inputs/outputs, it is necessary to modify two portable object accepting devices (or one if said object accepting devices can dialog) for each input/output, which is a lot more complicated. If the separation was not evident, one could make some modification inside the card-accepting device by accessing directly to the two I/Os.

In a particular embodiment of the present invention, the portable object is a smart card with an integrated electronic unit 6 : the electronic unit 6 comprises at least a microprocessor CPU 7 with two-way connection via an internal bus 8 to storage means, for example a non volatile memory 9 of type ROM, EEPROM, Flash, FeRam or else storing at least a program to be executed, a volatile memory 11 of type RAM and input/output means 13 to communicate with the exterior. The unit 6 may comprise additional components not shown, connected to the internal bus. This type of unit is generally manufactured as a monolithic integrated electronic circuit, or chip, which once physically protected by any known means can be assembled on the integrated circuit card or similar for use in various fields, such as the bank and/or electronic payment cards, mobile radio telephony, pay television, health and transport.

As shown in figure 2, the smart card is constituted of said chip in the thickness of the card connected to a module 2. The module 2 comprises a set of flat connectors 3 on the surface of the card allowing said chip to be connected and work with a card-accepting device.

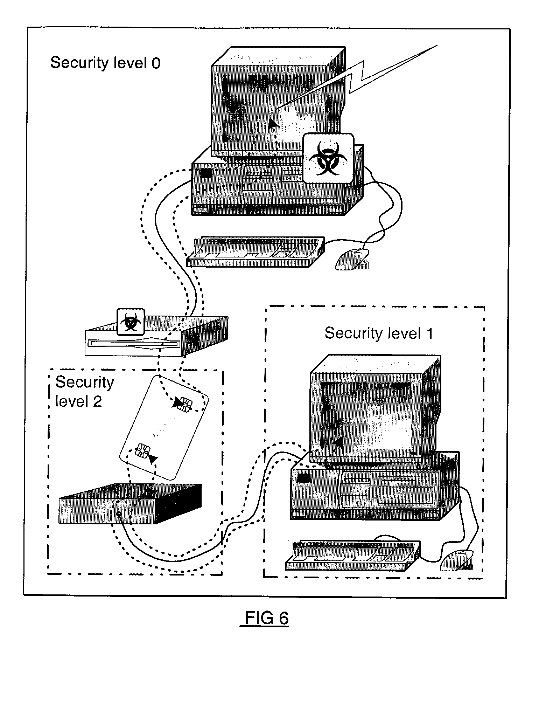

In the first implementation example here below (figure 5), it would be necessary to implement some wireless communication solution in the Pin pad to communicate with the insecure environment in order to complete the attack.

Moreover, the invention consists in providing a visual separation and differentiation between the contacts for the user as shown in figure 2. One electrical contact is part of the module linked to the chip and the other is separated and placed at the opposite side of the card with other isolated contacts, linked to the chip with invisible electric wire coated in the smart card plastic body.

Hence, the user sees with obviousness the concept of gateway and trusts in the system. For example, when the solution is used for purchase on Internet, the user is in charge of the terminal used for interfacing the smart card with the secure environment. He has to be sure that the terminal is not modified. So it is important that the user trusts its tools.

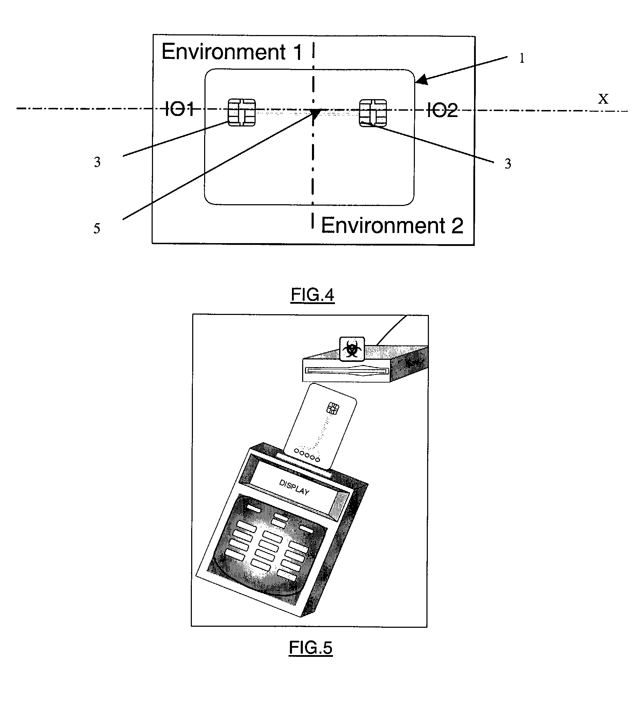

The invention consists also in improving this separation in differentiating the form (figure 2) or in determining the position (figure 4) of the contacts in such a way that when the card is inserted in one direction in the reader, the electrical contacts of the card and the reader match, but when inserted in the other direction in the same reader, it does not work. Hence, the card cannot be inserted in a reader in a wrong way.

As shown in figure 2, the contacts aimed to be connected to the first environment are part of the chip and the contacts aimed to be connected to the second environment are rounded isolated surface side by side and linked to the chip with invisible electric wire coated in the smart card plastic body. The contacts are visually separated and have different forms.

As illustrated by figure 4, the contacts have a determined position on the card. Here the contacts aimed to be connected to the first environment and the contacts aimed to be connected to the second environment are positioned on the same longitudinal axis X, which is not the central longitudinal axis. In this way, when the card is inserted in a reader aimed to work in the first environment, the contacts for the first environment match with the ones of the reader, which is not the case for the other contacts. The contacts aimed to be connected to the second environment are positioned in such a way that they cannot match with the connectors of the reader aimed to work in the first environment.

### Detailed description of practical examples

### Example 1 as represented in figure 5

### Summary:

The customer wants to perform a payment over the Internet, and the smart card application requires the PIN (Personal Identification Number) to be presented (e.g. EMV (Europay, MasterCard, Visa) payment). In order to avoid the user to type its PIN on a PC keyboard, an electronic device is equiped with the adequate keyboard and display. No battery is required as the PIN pad can be power by the smart card reader through the smart card because of the wire coated in the plastic body of the card.

### Description:

The smart cards reader is connected to a computer (unsafe environment). The smart card is in contact with the reader through its ISO 7816 contacts. The new electric connections ensure the link with the PIN pad.

### Scenario:

The user wants to perform a transaction over the Internet (purchase or other):
He connects its computer to the merchant site (browser).
He chooses its article, and goes to the on-line payment function. The article reference and price are displayed on the PC screen, while the server sends the on-line payment requirement to the smart card.

1- Receiving the request, the smart card addresses the PIN pad through the dedicated electric connections. The articles references and prices are displayed.
2- Having verified the information displayed on the pin pad LCD, the user validates them if he agrees.
3- The smart card and the PIN pad handle the PIN entering and verification functions. When successful, the smart card terminates the payment in collaboration with the merchant server.

### Example 2 as represented in figure 6

### Summary:

Assuming a smart card is a very secured environment, a standalone PC, or very controlled PC network, can be considered as a "secured area".
A "secured area" is not as secured as a smart card, but one can assume it is a trustable working environment.
Consequently, we can define three different levels of security:
- Level 0: any standard PC, possibly connected to the Internet, which as not been prepared for a particular security task (e.g. desktop or laptop PC)
- Level 1: a PC, or network of PCs, specifically designed to perform some tasks requiring a dedicated security level. Such computers are not connected to the outside word using usual means, and may not have any floppy, CD or DVD reader/player (i.e. inputs and outputs should be totally under control). It also should be placed in a secure office in order to control its access (i.e. physical access control)
- Level 2: a smart card or equivalent, which represents here the highest level of security, as this consideration is taken into account from the beginning to the end of its life cycle. This also includes software and hardware development, personalization consideration, security lock, ...

The important elements to remember are:
A security level 0 environment cannot be used for signing or verifying a document. *This is an insecure environment.*
A security level 1 environment is not secure enough for signing or verifying a document. The cryptographic keys required to perform the signature are a too sensitive data. By the way, level 1 should be enough to edit, display or print the document to sign and to verify. *This is a trustable environment.*
A security level 2 environment is specifically designed to handle sensitive data such as cryptographic keys. It is designed, loaded, upgraded and personalized in a secure environment. It is subject to security policy from its conception to its end of life. *This is a secure environment.*

The smart card ensures a security gateway function between the insecure (level 0) and the trustable (level 1) security environment. An adequate protocol (e.g. ber tlv) allows detecting protected data (using cryptographic means). If the data the smart card receives is not sealed, it is rejected. Assuming the smart card and the electronic device do not have enough memory to store a complete document, the data is sent to the security level 1 environment where it is temporarily stored (specific transition area). When all the data are received, and if the cryptographic verifications are successful, the smart card displays the result of a hashing calculation on the electronic device display. In the mean time, the PC placed in the security level 1 environment performs the same calculation and displays the result. The user compares the two displayed hashing calculation results. If they are equal, then he validates his verification by pressing the button on the electronic device. Receiving the confirmation from the electronic device, the secured PC moves the data from the temporary storage location to the working location in order to use the data.

In the other way, if the data is to be signed, it is sent to the smart card through the electronic device (from level 1 security environment).

## Claims

1. Portable object comprising at least storage means and at least two electrical contacts being connected to said storage means **characterized in that** at least two of said contacts are dielectrically separated.

2. Portable object according to claim 1, **characterized in that** said at least two contacts correspond to inputs/outputs.

3. Portable object according to one of claims 1 or 2, **characterized in that** the contacts are separated in such a way that an object accepting device can not access to both inputs/outputs.

4. Portable object according to one of claims 1 to 3, **characterized in that** it is a card with integrated circuit, the integrated circuit comprising said storage means connected to said contact through said integrated circuit.

5. Portable object according to one of the claims 1 to 4, **characterized in that** said contacts are visually separated.

6. Portable object according to one of the claims 1 to 5, **characterized in that** said contacts are differentiated in their forms on the object.

7. Portable object according to one of the claims 1 to 6, **characterized in that** said contacts are differentiated in their positions on the object.

8. Portable object according to claim 7, **characterized in that** the position of the contacts are such that, for a given object accepting device, when the portable object is inserted in said object accepting device in one direction, said contacts come into contact with the contacts provided in the object accepting device but not when inserted in the other direction.

9. Portable object according to one of the claims 1 to 8, **characterized in that** said contacts are on the same longitudinal axis which is different from the central longitudinal axis on the object.

10. Portable object according to one of the claims 1 to 9, **characterized in that** the contacts are positioned at the opposite longitudinal side of the object.
